**Europäisches Patentamt**

**European Patent Office**

**Office européen des brevets**

(19)

(11) **EP 1 161 024 A2**

(12) **EUROPÄISCHE PATENTANMELDUNG**

(43) Veröffentlichungstag:
05.12.2001 Patentblatt 2001/49

(51) Int Cl.⁷: **H04L 1/24**

(21) Anmeldenummer: **01106737.8**

(22) Anmeldetag: **17.03.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **03.06.2000  DE 10027660**

(71) Anmelder: **Tenovis GmbH & Co. KG
60362 Frankfurt am Main (DE)**

(72) Erfinder:
• **Rötsch, Gerald
38229 Salzgitter (DE)**
• **Zwirner, Ulrich
38300 Wolfenbüttel (DE)**

(74) Vertreter:
**Patentanwaltskanzlei WILHELM & BECK
Nymphenburger Strasse 139
80636 München (DE)**

(54) **Vorrichtung und Verfahren zur Bestimmung der Polung einer Modulationsleitung**

(57)     Die Erfindung betrifft eine Vorrichtung und ein Verfahren zur Bestimmung der Polung einer symmetrischen, gleichspannungsfreien Modulationsleitung, über welche zum Beispiel mehreren Sendern ein Modulationssignal zugeführt wird. Um versehentliche Vertauschungen der Polung auf dem Weg von der Quelle des Modulationssignals zum Sender zu erkennen, wird in einer Testphase ein Testsignal über die Modulationsleitung gesendet, anhand dessen Signalform die korrekte von der vertauschten Polung der Modulationsleitung unterschieden werden kann. Vorzugsweise handelt es sich bei dem Testsignal um eine Sägezahnform (la) mit unterschiedlich langen beziehungsweise steilen Anstiegsflanken und Abstiegsflanken. Durch einen Vergleich der Dauer der ansteigenden Flanke mit der Dauer der abfallenden Flanke kann dann im Sender festgestellt werden, ob dieses Verhältnis dem Verhältnis beim ursprünglichen Testsignal entspricht oder ob durch eine Polungsumkehr auch das Verhältnis vertauscht wurde. Vorzugsweise wird nach Feststellen einer Polungsvertauschung im Sender dauerhaft eine Umschaltung auf die richtige Polung vorgenommen.

Fig.2

EP 1 161 024 A2

**Beschreibung**

Technisches Gebiet

Die Erfindung betrifft ein Verfahren zur Bestimmung der Polung einer symmetrischen gleichspannungsfreien Modulationsleitung für die Zuführung von Modulationssignalen zu einem Sender sowie eine Vorrichtung zur Durchführung dieses Verfahrens. Weiterhin betrifft die Erfindung ein Verfahren zur Einstellung der Polung einer symmetrischen, gleichspannungsfreien Modulationsleitung an einem Sender auf eine vorgegebene Polung.

Stand der Technik

Es gibt verschiedene Anwendungen in der Elektrotechnik bzw. Elektronik, bei denen Signale über eine symmetrische, gleichspannungsfreie Modulationsleitung übermittelt werden. Symmetrie und Gleichspannungsfreiheit der Modulationsleitung bedeuten dabei, dass die beiden Enden der Modulationsleitung, an denen das übertragene elektrische Spannungssignal abgegriffen wird, eine reine Wechselspannung zur Verfügung stellen (Mittelwert der Spannung gleich Null), wobei jede Polungsrichtung gleichermaßen gut übertragen wird. Im Folgenden wird beispielhaft für die Anwendung einer solchen Modulationsleitung die Übertragung eines Modulationssignals an einen Funksender betrachtet, wobei die Erfindung jedoch nicht auf diese Anwendung beschränkt ist.

Das einem Sender zugeführte Modulationssignal dient als Trägersignal, welchem im Sender ein Nutzsignal (zum Beispiel Sprache oder Daten) aufmoduliert wird. Wenn mehrere Sender mit teilweise überlappendem Sendebereich vom gleichen Modulationssignal gespeist werden sollen (Gleichwelle), ist es wichtig, dass das analoge Modulationssignal allen Sendern mit der gleichen Phasenlage zugeführt wird. Nicht zuletzt bei großen Funkrufanlagen kann es jedoch in der Praxis durchaus vorkommen, dass bei der Montage die zwei Adern der symmetrischen Modulationsleitung zum Beispiel an einem Verteiler versehentlich vertauscht werden. Hierdurch vertauscht sich die Polung der am Ende der Modulationsleitung beim Sender ankommenden Spannung. Ein Vertauschen der Polung entspricht mathematisch einer Multiplikation der Signalform mit dem Faktor (-1). Wenn das in die Leitung eingespeiste Signal speziell die Form einer geraden oder ungeraden periodischen Funktion wie zum Beispiel einer Kosinus- oder Sinusfunktion hat, dann entspricht das Vertauschen der Polung einer Phasenverschiebung dieser Funktion um 180°. Die Verwendung einer solchen versehentlich phasenverschobenen Modulationsspannung führt im Überlappungsbereich des Sendegebietes des betroffenen Senders mit anderen Sendern, die dasselbe Modulationssignal unverfälscht erhalten, zu massiven Störungen des ausgestrahlten Nutzsignals. In diesem Bereich verwendete Mobilempfänger können daher das Nutzsignal in der Regel nicht mehr auswerten.

Darstellung der Erfindung, Aufgabe, Lösung, Vorteile

Aufgabe der vorliegenden Erfindung war es, ein Verfahren und eine Vorrichtung zur Verfügung zu stellen, mit welchen sich Funktionsbeeinträchtigungen durch versehentlich vertauschte Polungen von zum Beispiel Modulationsleitungen vermeiden lassen.

Diese Aufgabe wird durch ein Verfahren nach den Ansprüchen 1 und 6 sowie eine Vorrichtung nach Anspruch 7 gelöst. Vorteilhafte Ausgestaltungen sind in den zugehörigen Unteransprüchen angegeben.

Die Erfindung betrifft demnach zunächst ein Verfahren zur Bestimmung der Polung einer symmetrischen, gleichspannungsfreien Modulationsleitung, welche der Zuführung von Modulationssignalen zu einem Sender dient. Wie bereits eingangs erläutert wurde, ist hierbei der Ausdruck Sender in einem weiten Sinne zu verstehen und umfasst alle Anwendungen, bei denen ein entsprechendes Modulationssignal verwendet wird. Das Verfahren ist dadurch gekennzeichnet, dass ein Testsignal über die Modulationsleitung gesendet wird, dessen Signalform einen von der Phasenlage unabhängigen, gleichzeitig jedoch von der Polung des Testsignals abhängigen Kennwert enthält, und dass im Sender der genannte Kennwert des Testsignals bestimmt wird. Da der Kennwert von der Polung des eingespeisten Modulationssignals abhängt, kann durch seine Bestimmung im Sender überprüft werden, mit welcher Polung das Testsignal ankommt. Sollte bei der Installation der Modulationsleitung versehentlich ein Vertauschen von Adern stattgefunden haben, so kann dieses mit dem genannten Verfahren erkannt werden, so dass sich gegebenenfalls geeignete Korrekturmaßnahmen einleiten lassen.

Signalformen, die einen von der Phasenlage unabhängigen und von der Polung abhängigen Kennwert aufweisen, gibt es in verschiedenster Ausprägung. Mathematisch lassen sich diese Signale allgemein durch eine von der Zeit t abhängige Funktion s(t) beschreiben, wobei der Kennwert k im allgemeinsten Fall ein Funktional des gesamten Funktionsverlaufes ist:

Phasenunabhängigkeit des Kennwertes bedeutet, dass für alle Phasenverschiebungen $\varphi$ gilt:

$$K[s(t)] = K[s(t + \varphi)]$$

Polungsabhängigkeit des Kennwertes bedeutet, dass

$$K[s(t)] \neq K[-s(t)]$$

Im einfachsten Fall könnte beim Testsignal s(t) zum Beispiel die maximale Amplitude des Signals in positiver Richtung verschieden von der maximalen Amplitude in negativer Richtung sein und der Kennwert der Differenz beider Amplituden entsprechen:

$$K[s] = \max_t s(t) - \left| \min_t s(t) \right|$$

Am Ende der Modulationsleitung ließe sich dann im Sender durch Vergleich der Amplituden bzw. durch das Vorzeichen von K[s] feststellen, ob die Adern der Modulationsleitung auf dem Verlegungsweg vertauscht wurden beziehungsweise wie die ankommenden Adern in Bezug auf die zu bildende Spannungsdifferenz zu definieren sind, damit das Testsignal die gewünschte Polung aufweist.

Bei einer erfindungsgemäß bevorzugten Signalform des Testsignals besteht das Testsignal aus mindestens einem ansteigenden und mindestens einem abfallenden Abschnitt, wobei die Absolutwerte der Steigungen dieser Abschnitte unterschiedlich groß sind. Wenn bei der Einspeisung des Testsignals unter "richtiger" Polung der ansteigende Abschnitt zum Beispiel eine kleinere absolute Steigung hat als der abfallende Abschnitt, so kann am Ausgang der Modulationsleitung beim Sender durch Vergleich der Steigungen des Testsignals festgestellt werden, ob die eingangsseitige "richtige" Polung vorliegt oder die umgekehrte Polung. Die Codierung der Polung des Testsignals in der Steigung von Abschnitten des Testsignals hat den Vorteil, dass diese Steigung verhältnismäßig störungssicher und unabhängig von sonstigen Übertragungseigenschaften der Modulationsleitung übermittelt wird.

Ein Testsignal der zuvor genannten Art kann im einfachsten Falle eine Sägezahnform aufweisen, wobei die Anstiegsflanke und die Abstiegsflanke des Sägezahnsignals jeweils unterschiedliche Dauer haben. Da die Anstiegsflanke und Abstiegsflanke jeweils am selben Amplitudenpunkt sich aneinander anschließen, entspricht eine größere Dauer einem flacheren Verlauf der entsprechenden Flanke und damit einer kleineren Steigung. Sägezahnsignale haben den Vorteil, dass sie sich verhältnismäßig einfach und mit üblichen Mitteln erzeugen lassen.

Wenn die Polung des Testsignals in der Steigung seiner Abschnitte codiert ist, findet am Ausgang der Modulationsleitung im Sender vorzugsweise eine Differenzierung des dort empfangenen Testsignals statt, um hierüber den Wert der jeweiligen Steigung zu bestimmen.

Gemäß einer Weiterentwicklung des oben genannten Verfahrens werden im Sender vorzugsweise zunächst der Kennwert des ursprünglichen Testsignals und anschließend der Kennwert des umgepolten Testsignals bestimmt und dann miteinander verglichen. Dieses Vorgehen hat den Vorteil, dass es nicht auf den Absolutwert des Kennwertes ankommt, um die Polung des Testsignals zu bestimmen, sondern dass die Polung über einen Vergleich der beiden ermittelten Kennwerte festgestellt wird.

Ein solches Vorgehen ist zuverlässiger, da der Absolutwert des Kennwertes häufig zahlreichen Einflüssen wie dem Übertragungsverhalten der Modulationsleitung unterliegt. Derartige Einflüsse wirken sich jedoch auf das ursprüngliche und das umgepolte Testsignal gleichermaßen aus, so dass sie das Verhältnis der jeweils ermittelten Kennwerte im wesentlichen unverändert lassen. Die Umpolung des Testsignals kann sowohl am Eingang der Modulationsleitung erfolgen als auch am Ausgang der Modulationsleitung im Sender.

Die Erfindung betrifft weiterhin ein Verfahren zur Einstellung der Polung einer symmetrischen, gleichspannungsfreien Modulationsleitung, die der Zuführung von Modulationssignalen zu einem Sender dient, auf eine vorgegebene Polung. Das Verfahren ist dadurch gekennzeichnet, dass zunächst die Polung der Modulationsleitung nach einem Verfahren der oben erläuterten Art bestimmt wird und dass anschließend im Sender die Polung umgekehrt wird, falls sie nicht der vorgegebenen Polung entspricht. Das Verfahren beschränkt sich also nicht nur darauf, die Art der Polung festzustellen, sondern stellt darüber hinaus die vorhandene Polung gegebenenfalls um, damit sie einer gewünschten Polung entspricht. Auf diese Weise können Vertauschungen bei der Installation der Modulationsleitung ausgeglichen werden, welche gerade bei großen Funkanlagen immer wieder vorkommen.

Das Verfahren kann darüber hinaus auch dazu verwendet werden, die Installation von Modulationsleitungen dadurch zu vereinfachen, dass hierbei nicht mehr auf den polungsrichtigen Anschluss der Adern geachtet werden muss. Die Modulationsleitung kann dann unter erheblicher Vereinfachung des Installationsaufwandes ohne Beachtung der Einhaltung der richtigen Polung von der Quelle zum Sender geführt werden. Die dann statistisch gesehen in 50 % der Fälle notwendige Umkehr der Polung beim Sender kann dort anschließend mit dem erfindungsgemäßen Verfahren automatisch durchgeführt werden.

Die Erfindung betrifft ferner eine Vorrichtung zur Durchführung des oben erläuterten Verfahrens zur Bestimmung und gegebenenfalls Anpassung der Polung einer symmetrischen, gleichspannungsfreien Modulationsleitung zur Zuführung von Modulationssignalen zu einem Sender. Die Vorrichtung ist dadurch gekennzeichnet, dass sie einen Generator zur Erzeugung des Testsignals am Eingang der Modulationsleitung enthält sowie eine Auswertungsschaltung im Sender zur Bestimmung des Kennwertes des Testsignals. Nach Feststellung des Kennwerts des Testsignals liegt dann die benötigte Information darüber vor, ob die Modulationsleitung in der gewünschten Weise gepolt ist oder ob gegebenenfalls eine Umpolung erforderlich ist.

Die Auswerteschaltung der Vorrichtung enthält vorzugsweise ein Differenzierglied, welchem das Testsignal zugeführt wird. Mit diesem Differenzierglied lässt sich die Steigung des Testsignals feststellen, die sich besonders zur Codierung der Polung eignet.

Die genannte Auswerteschaltung enthält weiterhin vorzugsweise einen Gleichrichter, welchem das aus dem Differenzierglied kommende differenzierte Signal zugeführt wird. Ein solcher Gleichrichter kann beispielsweise bewirken, dass das Minimum des differenzierten Signals auf der Nulllinie liegt, so dass durch eine einfache anschließende Auswertung wie zum Beispiel eine Mittelwertbildung festgestellt werden kann, ob die ansteigenden Flanken des empfangenen Testsignals eine größere Steigung hatten als die abfallenden Flanken oder umgekehrt. Sollte sich das so ermittelte Ergebnis (Kennwert) von den Verhältnissen beim ursprünglich eingespeisten Testsignal unterscheiden, so ist dies ein Hinweis darauf, dass auf dem Weg der Modulationsleitung eine Polungsvertauschung stattfindet.

Die Auswerteschaltung kann weiterhin einen Analog-Digital-Wandler (A/D-Wandler) enthalten, welchem das gegebenenfalls vorverarbeitete Testsignal zugeführt wird, sowie einen digitalen Prozessor, dem das digitale Signal des A/D-Wandlers zwecks Auswertung zugeführt wird. Nach der Umwandlung eines analogen Testsignals in ein digitales Signal kann die Auswertung des Testsignals in einem Mikroprozessor stattfinden, wobei eine entsprechende Programmierung des Mikroprozessors quasi grenzenlose Möglichkeiten für die Berechnung von Kennwerten aus dem Testsignal bietet.

Gemäß einer Weiterentwicklung der Vorrichtung kann diese zusätzlich einen Umpoler enthalten, durch welchen im Sender eine Umpolung der Modulationsleitung stattfinden kann. Die Umpolung kann dabei insbesondere durch ein Kommando von der ebenfalls im Sender angeordneten Auswerteschaltung vorgenommen werden. Mit einer derartigen Vorrichtung lässt sich automatisch zunächst die Polung einer im Sender ankommenden Modulationsleitung feststellen und anschließend gegebenenfalls eine gewünschte Polung dauerhaft einstellen.

Kurze Beschreibung der Zeichnungen

Im folgenden wird die Erfindung mit Hilfe der Figuren beispielhaft erläutert. Es zeigen:

Fig. 1    das Schaltbild einer Vorrichtung zur Bestimmung und Veränderung der Polung einer in einem Sender ankommenden Modulationsleitung;

Fig. 2    Signalformen eines Testsignals an verschiedenen Punkten der Schaltung aus Figur 1.

Bester Weg zur Ausführung der Erfindung

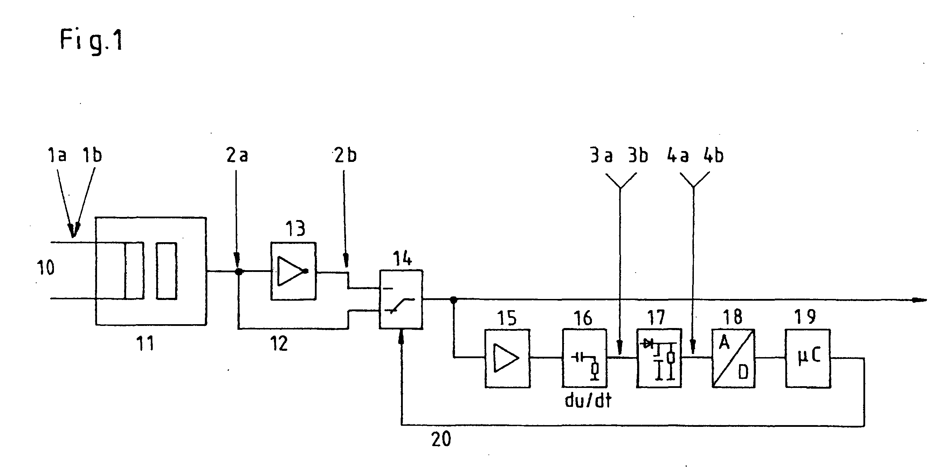

In Figur 1 sind schematisch die Bauelemente einer erfindungsgemäßen Vorrichtung zur Bestimmung der Polung einer in einem Sender ankommenden Modulationsleitung 10 dargestellt. Über die Modulationsleitung 10 wird im normalen Betrieb dem Sender von einer räumlich entfernt angeordneten Quelle ein Modulationssignal zugeführt, welches vom Sender zur Aufmodulation eines Nutzsignals verwendet wird. Typischerweise handelt es sich bei einem solchen Modulationssignal um eine Sinusspannung. Bei einem Mehrsender-System (Gleichwelle) muss das genannte Modulationssignal allen Sendern mit gleicher Phasenlage zugeführt werden, damit es nicht zu Störungen im Überlappungsbereich der Sender kommen kann. Auf dem Weg von der Quelle (nicht dargestellt) des Modulationssignals zum Sender kann es jedoch zu einem versehentlichen Vertauschen der beiden Adern der Modulationsleitung 10 kommen, so dass das Modulationssignal mit vertauschter Polung beim Sender ankommt. Bei einem Signal wie zum Beispiel einer Sinusfunktion entspricht diese Vertauschung der Polung einer Phasenverschiebung um 180°.

Mit der in Figur 1 dargestellten Schaltung kann die Polung eines geeigneten Testsignals auf der Modulationsleitung 10 festgestellt werden, so dass auch eine eventuelle Vertauschung der Adern der Modulationsleitung erkannt werden kann.

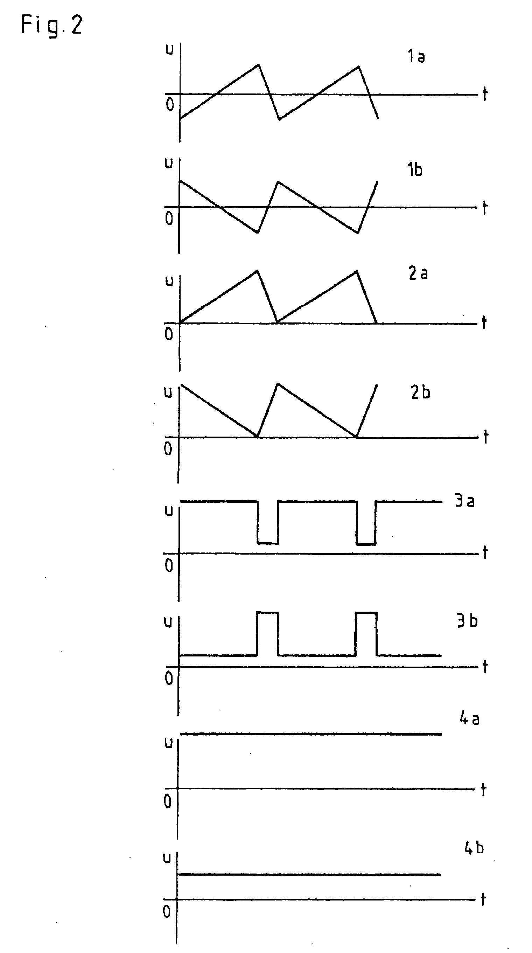

Das zu diesem Zweck eingesetzte Testsignal hat vorzugsweise die in Figur 2 dargestellte Form eines asymmetrischen Sägezahnes 1a. Das Frequenzspektrum des Testsignals ist so gewählt, dass es in den Übertragungsbereich der Nutzsignale passt. Typischerweise beträgt die Dauer der ansteigenden Flanke des Signals 1,4ms (+0/-0,1ms) und die Dauer der abfallenden steilen Flanke ca. 0,3ms (+0/-0,1ms) bei einer $\alpha$2-Funkrufanlage. Da die Modulationsleitung 10 symmetrisch und gleichspannungsfrei ist, sind die oberhalb und unterhalb der Nulllinie des Testsignals 1a gelegenen und von der Kurve des Testsignals eingeschlossenen Flächen gleich groß. Der Mittelwert des Testsignals über eine Periodendauer beträgt somit Null. Eine Detektion der Polung der Modulationsleitung 10 ist demnach nicht in der einfachen Weise möglich, dass eine Gleichspannung oder ein Gleichspannungsanteil hieran angelegt wird und überprüft wird, ob die eingespeiste Gleichspannung beim Sender mit derselben Polung ankommt oder nicht.

Das in Figur 2 dargestellte Testsignal 1a entspricht im nachfolgenden Beispiel dem eingespeisten Testsignal. Es kommt in dieser Form über die Modulationsleitung 10 beim Sender an, wenn die Adern der Modulationsleitung zwischendurch nicht vertauscht wurden. Falls dagegen eine solche Vertauschung versehentlich stattgefunden hat, hat das beim Sender ankommende Signal die in Figur 2 dargestellte Signalform 1b. Diese entspricht aufgrund der Umpolung einer Vorzeichenumkehr des Signals 1a.

Mit der in Figur 1 dargestellten Schaltung ist es nun möglich, die beiden Signalformen 1a und 1b voneinander zu unterscheiden und somit festzustellen, ob eine Vertauschung der Polung stattgefunden hat oder nicht.

Im Sender wird das Testsignal auf der Modulationsleitung 10 zunächst der primären Seite eines Transformators 11 zugeleitet. Die im Sender weiter verarbeitete Spannung wird der Sekundärseite des Transformators entnommen, wobei in der Schaltung zur Vereinfachung die als Nullpotential definierte Masseleitung weggelassen wurde. Unmittelbar hinter dem Transformator 11 kann das in Figur 2 dargestellte Signal 2a abgegriffen werden, bei welchem die Sägezahnform auf den Bereich oberhalb der Nulllinie verschoben ist. Die dargestellte Form 2a ist dabei zu beobachten, wenn das Testsignal ohne Polungsvertauschung als Signal 1a beim Sender ankommt.

Das den Transformator 11 verlassende Signal 2a kann über einen Wechselschalter 14 der nachfolgenden Verarbeitungsstufe zugeführt werden. Weiterhin wird das den Transformator 11 verlassende Signal über einen Umpoler 13 geleitet, welcher die Polung dieses Signals umkehrt. Am Ausgang des Umpolers 13 hat das Signal dann die in Figur 2 dargestellte Form 2b. Über den Wechselschalter 14 kann wahlweise auch anstelle des Signals 2a das in der Polung umgekehrte Signal 2b zur Weiterverarbeitung ausgewählt werden.

Vom Ausgang des Wechselschalters 14 ausgehend wird das Signal 2a (beziehungsweise nach Umlegen des Schalters das Signal 2b) zunächst an einen Verstärker 15 und von diesem an ein Differenzierglied 16 weitergeleitet. Im Differenzierglied 16 wird die Ableitung des Signals gebildet, welche als Signalform 3a in Figur 2 für das Signal 2a dargestellt ist. Die Signalform 3b von Figur 2 entspricht der Ableitung des Signals 2b, das durch Umpolung des empfangenen Signals im Umpoler 13 erhalten wird. Weiterhin sind bei den hinter dem Differenzierglied 16 vorliegenden Spannungen 3a, 3b die Minima auf einen vorgegebenen positiven Wert angehoben worden.

Hinter dem Differenzierglied 16 ist ein Gleichrichter 17 angeordnet, in welchem unter anderem der Mittelwert des das Differenzierglied 16 verlassenden Signals 3a (beziehungsweise 3b) gebildet wird. Dieser Mittelwert ist in Figur 2 als Signalform 4a für das auf das empfangene Signal 2a zurückgehende Signal dargestellt. Wenn das empfangene Signal im Umpoler 13 einer Vertauschung der Polung unterzogen wird, wird dagegen die Kurvenform 4b gemäß Figur 2 beobachtet.

Der absolute Wert des den Gleichrichter 17 verlassenden Signals 4a beziehungsweise 4b ist ein Maß dafür, wie lang die ansteigende Flanke des der Verarbeitung zugeführten Signals ist. Aus diesem Wert allein lässt sich daher prinzipiell schon bestimmen, ob vom Sender über die Modulationsleitung 10 ein richtig gepoltes Testsignal 1a oder ein vertauscht gepoltes Testsignal 1b empfangen wird.

In der Praxis erweist es sich allerdings als sinnvoll, auch eine Kontrollmessung mit vertauschter Polung auszuführen. Dabei wird der Wechselschalter 14 umgelegt und der Verarbeitungsstufe somit das Signal 2b zugeführt. Die Auswertung dieses Signals führt hinter dem Gleichrichter 17 zu dem in Figur 2 dargestellten Signal 4b. Durch einen Vergleich der Werte zu den nicht umgepolten und umgepolten Signalen 4a und 4b kann festgestellt werden, dass das Signal 4b im dargestellten Falle kleiner ist als das Signal 4a. Ein solches Größenverhältnis ist aussagekräftiger und robuster als der absolute Wert eines einzelnen Signals 4a oder 4b allein. Die Amplitude und Form des Testsignals ist nämlich stark von der Leitungslänge (bis zu 10km) und der Leitungsqualität abhängig. Nach Differentiation und Gleichrichtung des sägezahnförmigen Testsignals in der Auswerteschaltung erhält man in Abhängigkeit von der Signalform somit unterschiedliche Absolutwerte der Gleichspannung, die sich durch die gezielte Phasenumkehr im Wechselschalter 14 ergeben. Da beide den gleichen oben genannten Einflüssen durch die Leitung unterliegen, ist das Verhältnis dieser Absolutwerte eine sichere Kenngröße dafür, ob das ankommende Signal 2a oder das gezielt umgepolte Signal 2b dem ursprünglich eingespeisten Testsignal entspricht.

Hinter dem Gleichrichter 17 befindet sich ein A/D-Wandler, welcher das analoge Signal in ein digitales Signal umwandelt. Dieses digitale Signal kann im nachgeschalteten Mikrocomputer 19 analysiert und ausgewertet werden. Der Mikrocomputer 19 kann ferner die Umschaltung des Wechselschalters 14 veranlassen, um die Messung zu vervollständigen.

Die oben erläuterte Polaritätsbestimmung wird bei Bedarf oder zyklisch (zum Beispiel bei der Inbetriebnahme der Anlage) durch die Zentrale aktiviert. Dabei findet zunächst die Übertragung eines definierten Steuertelegrammes an die Sender zur Aktivierung der Polaritätsbestimmung statt. Anschließend wird die Modulationssignal-Amplitudenregelung im Sender auf den passenden Amplitudenwert des Steuertelegrammes "geklemmt". Das heißt, die nachfolgende Testsignalbewertung muss bei konstanter Testsignalamplitude erfolgen.

Nach Aussendung des Steuertelegrammes generiert die Zentrale das sägezahnförmige Testsignal und überträgt dieses an die angeschlossenen Sender. Im Sender wird dann das Signal wie oben beschrieben bewertet und der Messwert zwischengespeichert. Anschließend wird das Signal innerhalb des Senders in der Polung umgekehrt und erneut bewertet. Die auf diese Weise ermittelten Messwerte werden miteinander verglichen. Der größere Messwert korrespondiert im dargestellten Beispiel mit der korrekten Polung der Modulationsleitung. Die hierzu passende Phasenlage beziehungsweise Polung des Modulationssignals wird im Sender eingeschaltet. Sollte kein eindeutiger Unterschied zwischen den Messwerten festgestellt werden, was zum Beispiel bei gestörter Modulationsleitung der Fall sein kann, erfolgt eine Störungsmeldung, und der Sender wird deaktiviert. Das heißt, dass er nicht mehr aufgetastet werden kann.

Nach Beendigung des Testsignals überträgt die Zentrale ein weiteres Steuertelegramm zum Beenden der Polaritätsbestimmung.

Die Amplitudenklemmung des Modulationssignals sowie die Polaritätsbestimmung und Polaritätsumschaltung werden im Sender durch einen Mikrocontroller gesteuert.

Abschließend sei erneut darauf hingewiesen, dass das oben beschriebene Verfahren auch in anderen leitungsgebundenen Systemen als den beispielhaft betrachteten zur Anwendung kommen kann.

## Patentansprüche

1. Verfahren zur Bestimmung der Polung einer symmetrischen, gleichspannungsfreien Modulationsleitung (10) für die Zuführung von Modulationssignalen zu einem Sender,
**dadurch gekennzeichnet, dass**
ein Testsignal (1a) über die Modulationsleitung gesendet wird, dessen Signalform einen von der Phasenlage unabhängigen und der Polung abhängigen Kennwert enthält, und dass im Sender der Kennwert des Testsignals bestimmt wird.

2. Verfahren nach Anspruch 1, **dadurch gekennzeichnet, dass** das Testsignal (1a) aus ansteigenden und absteigenden Abschnitten besteht, wobei die Absolutwerte der Steigungen in den Abschnitten unterschiedlich groß sind.

3. Verfahren nach Anspruch 2, **dadurch gekennzeichnet, dass** das Testsignal eine Sägezahnform (1a) mit unterschiedlich langer Anstiegsflanke und Abstiegsflanke hat.

4. Verfahren nach Anspruch 2 oder 3, **dadurch gekennzeichnet, dass** das Testsignal (1a) zur Bestimmung der Steigungen differenziert wird.

5. Verfahren mindestens nach einem der Ansprüche 1 bis 4, **dadurch gekennzeichnet, dass** im Sender die Kennwerte des Testsignals (1a) und des umgepolten Testsignals (1b) bestimmt und miteinander verglichen werden.

6. Verfahren zur Einstellung der Polung einer symmetrischen, gleichspannungsfreien Modulationsleitung (10), die der Zuführung von Modulationssignalen zu einem Sender dient, auf eine vorgegebene Polung,
**dadurch gekennzeichnet, dass**
die Polung der Modulationsleitung nach einem Verfahren nach mindestens einem der Ansprüche 1 bis 5 bestimmt und anschließend im Sender umgekehrt wird, falls sie nicht der vorgegebenen Polung entspricht.

7. Vorrichtung zur Durchführung des Verfahrens nach mindestens einem der Ansprüche 1 bis 6,
**dadurch gekennzeichnet, dass**
sie am Eingang der Modulationsleitung (10) einen Generator zur Erzeugung des Testsignals (1a) sowie im Sender eine Auswerteschaltung (11 bis 19) zur Bestimmung des Kennwertes des Testsignals (1a) enthält.

8. Vorrichtung nach Anspruch 7, **dadurch gekennzeichnet, dass** die Auswerteschaltung ein Differenzierglied (16) enthält, welchem das Testsignal (2a, 2b) zugeführt wird.

9. Vorrichtung nach Anspruch 8, **dadurch gekennzeichnet, dass** sie einen Gleichrichter (17) enthält, welchem das aus dem Differenzierglied (16) kommende differenzierte Signal (3a, 3b) zugeführt wird.

10. Vorrichtung nach mindestens einem der Ansprüche 7 bis 9, **dadurch gekennzeichnet, dass** sie einen A/D-Wandler (18) enthält, welchem das gegebenenfalls vorverarbeitete Testsignal (4a, 4b) zugeführt wird, sowie einen Mikroprozessor (19), dem das digitale Signal des A/D-Wandlers (18) zugeführt wird.

11. Vorrichtung nach mindestens einem der Ansprüche 7 bis 10, **dadurch gekennzeichnet, dass** sie einen Umschalter (14) zur Umpolung der Modulationsleitung (10) enthält.

Fig.1

EP 1 161 024 A2

Fig.2

1a

1b

2a

2b

3a

3b

4a

4b